# EUROPEAN PATENT APPLICATION

(11) **EP 4 607 656 A1**
(43) Date of publication of application: **27.08.2025**
(21) Application number: 25159879.3
(22) Date of filing: 25.02.2025
(51) Int. Cl.: H01M 10/658, H01M 50/204, H01M 50/251, H01M 50/291, H01M 50/293

(54) **ENERGY STORAGE CABINET**

(30) Priority: 26.02.2024 CN 202420356464 U
(71) Applicant: Sungrow Power Supply Co., Ltd., Hefei, Anhui 230088 (CN)
(72) Inventor: WANG, Peng, Hefei, 230088 (CN); LV, Qiang, Hefei, 230088 (CN); WANG, Yemin, Hefei, 230088 (CN); WU, Haibo, Hefei, 230088 (CN)
(74) Representative: Rooney, John-Paul

(57) **Abstract**

An energy storage cabinet comprises a cabinet body and a partition assembly, an upper installation space and a lower installation space are arranged in the cabinet body; slide rails are respectively arranged on two opposite inner walls of the cabinet body; the slide rails are arranged between the upper installation space and the lower installation space; and grooves are arranged on upper side surfaces of the sliding rails. The partition assembly is used for separating the upper installation space and the lower installation space, and is provided with a roller which can be snapped into the groove and can roll along the slide rail to move the partition assembly out of the cabinet. When the electrical element breaks down and needs to be taken out, the partition assembly can be pulled out, so that the roller can move out of the groove and roll on the slide rail, and the partition assembly can be smoothly pulled out of the cabinet, which is convenient for the subsequent removal of the electrical element. The roller is matched with the groove to limit the position, so that the partition assembly can move vertically upwards. When the electrical element is deformed seriously, the partition assembly can be jacked up to provide deformation space for the electrical element.

## Description

### FIELD

The present application relates to the technical field of energy storage apparatus, in particular to an energy storage cabinet.

### BACKGROUND

At present, the market has a high demand for energy storage system products with a high integration and high efficiency. The high integration of the system leads to a compact layout of internal elements as well as low manufacturability and maintainability of the products. If the product fails, an increased maintenance difficulty may cause great economic losses to customers and manufacturers.

In the layout of existing energy storage system, the electrical elements are generally placed in a lower layer of a battery compartment, and a battery pack is placed in an upper layer of the battery compartment, and the battery compartment is divided into two compartments by a partition plate fixed via screws. When an electrical element in the bottom layer is broken down or damaged, it is necessary to take the electrical element out for maintenance or replacement. However, if the electric device is seriously deformed, the electric device is quite difficult to take out, and the partition plate is also difficult to remove because the partition plate is fastened by screws. At this time, the upper battery pack needs to be taken our first and the partition plate needs to be removed. The operation of taking the battery pack out causes the whole machine to stop running and makes the maintenance and replacement efficiency low.

Therefore, it is urgent to improve the energy storage cabinet in order to solve the above problems.

### SUMMARY

An object of the present application is to provide an energy storage cabinet. The space in the energy storage cabinet is separated by a retractable partition plate, so that the lower electrical element may be taken out without having to take the upper battery pack out, thus it is convenient to maintain the electrical element, and, the operation of the whole machine is not affected.

To achieve the object, the present application adopts the following technical solutions.

An energy storage cabinet includes a cabinet body and a partition assembly, and
an upper installation space and a lower installation space are provided in the cabinet body, and a slide rail is provided on each of the two opposite inner walls of the cabinet body, the slide rail is provided between the upper installation space and the lower installation space, and a groove is provided in an upper side surface of the slide rail;
the partition assembly is configured for separating the upper installation space from the lower installation space, and the partition assembly is provided with a roller, and the roller can be snapped into the groove and can roll along the slide rail to move the partition assembly out of the cabinet body.

Optionally, an opening is defined on a front side of the cabinet body, and the partition assembly may move out of the cabinet body through the opening. A slope is formed on one side of the groove proximate to the opening, so the roller may roll along the slope to move out of the groove.

Optionally, the partition assembly is defined with an installation hole, and the roller is mounted in the installation hole, and the roller protrudes from a bottom side surface of the partition assembly, so that the roller can be snapped into the groove.

Optionally, a height of the portion of the roller protruding from the partition assembly is equal to a depth of the groove, and the partition assembly is in contact with the slide rail when the roller is snapped into the groove.

Optionally, the slide rail is provided with multiple grooves, and the partition assembly is correspondingly provided with multiple rollers, and each roller is correspondingly snapped into one of the grooves.

Optionally, the partition assembly includes a partition plate and a blocking strip, wherein the partition plate is movably provided on the slide rail, and the blocking strip is provided on a bottom side surface of the partition plate.

Optionally, the blocking strip extends in a movement direction of the partition assembly.

Optionally, the partition plate includes a heat insulation tank and a cover plate. The heat insulation tank is internally provided with heat insulation materials, and the heat insulation tank is provided at a bottom side of the cover plate, and an edge of the cover plate extending beyond the heat insulation tank is provided with the roller.

Optionally, the blocking strip is made of an epoxy resin material.

Optionally, one of the cabinet body and the partition assembly is provided with a positioning pin, and the other of the cabinet body and the partition assembly is provided with a positioning hole. The positioning pin or positioning hole is provided on a rear side wall of the cabinet body, and the positioning pin is inserted into the positioning hole when the partition assembly is inserted into the cabinet body.

Optionally, a battery pack is provided in the upper installation space, and an electrical element is provided in the lower installation space.

The present application has the following beneficial effects.

In the energy storage cabinet proposed in the present application, the cabinet body is divided into the upper installation space and the lower installation space by providing the partition assembly. When the partition assembly is mounted in the cabinet body, the partition assembly is mounted on the slide rail, so that the roller is snapped into the groove for limitation. When the electrical element needs to be taken out due to failure, the partition assembly may be pulled so as to move the roller out of the groove and roll on the slide rail, thereby the partition assembly is smoothly pulled out of the cabinet body, so it is convenient to take the electrical element out. The roller and the groove are limitedly cooperated with each other, so that the partition assembly may move vertically upwards. When the electrical element is significantly deformed, the partition assembly may be lifted up to provide a deformation space for the electrical element, so it is possible prevent the partition assembly from being squeezed and deformed by the electrical element in such a way that the partition assembly cannot be taken out. Moreover, if the deformation of the electrical element is not significant, there is still a gap between the electrical element and the partition assembly, so it is not necessary to pull out the blocking assembly, and the electrical element may be pulled out directly.

### BRIEF DESCRIPTION OF THE DRAWINGS

FIG. 1 is a schematic structural view of an energy storage cabinet according to an embodiment of the present application;
FIG. 2 is a schematic structural view of a partition assembly according to the embodiment of the present application from one perspective;
FIG. 3 is a schematic view of a disassembly structure of the partition assembly according to the embodiment of the present application;
FIG. 4 is a schematic structural view of the partition assembly according to the embodiment of the present application from another perspective;
FIG. 5 is a schematic partial structural view of the energy storage cabinet according to the embodiment of the present application.

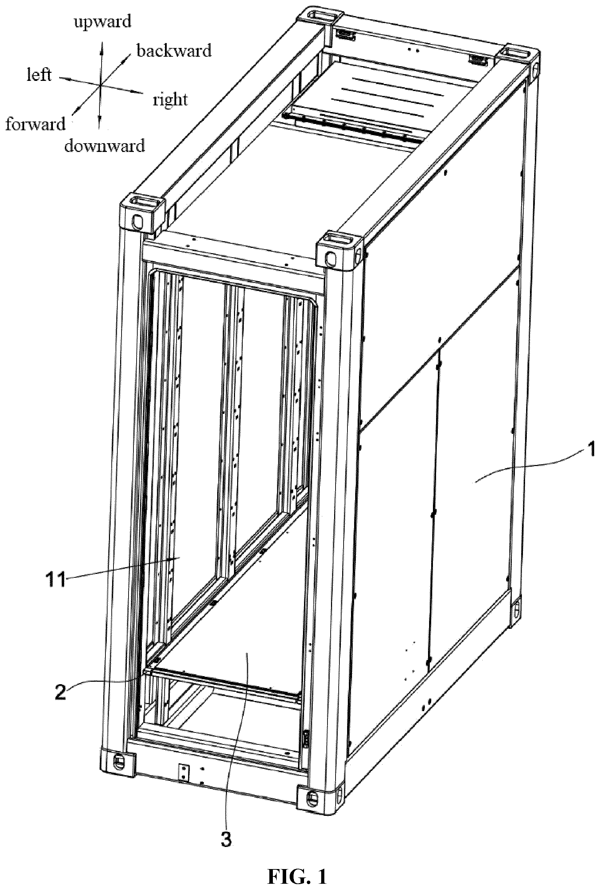

Reference numerals are as follows in FIG. 1- FIG.5:

| | | | | | |
|---|---|---|---|---|---|
| 1. | cabinet body; | 11. | opening; | 12. | positioning pin; |
| 2. | slide rail; | 21. | groove; | 3. | partition assembly; |
| 31. | partition plate; | 311. | heat insulation tank; | | |
| 312. | cover plate; | 32. | blocking strip; | 4. | roller. |

### DETAILED DESCRIPTION OF THE EMBODIMENTS

The present application is further described in detail in conjunction with the accompanying drawings and embodiments below. It should be understood that the specific embodiments described here are only used to explain the present application, but not to limit the present application. In addition, it should be noted that, for the convenience of description, only some of the structures related to the present application rather than all of the structures are shown in the accompanying drawings.

In the description of the present application, unless otherwise specifically defined, the terms "linked", "connected" and "fixed" should be understood broadly. For example, the terms may imply a fixed connection, a detachable connection, or an integral connection; a mechanical connection, or an electrical connection; a direct connection or an indirect connection through an intermediate media; an internal communication inside two elements or an interaction relationship between the two elements. For those skilled in the art, the specific meaning of the above terms in the present application may be understood in the light of specific circumstances.

In the present application, unless otherwise explicitly specified and limited, a first feature being "on" or "under" a second feature may include direct contact between the first and second features, and may also include that the first and second features are not in direct contact with each other but via another feature between them. Furthermore, the fact that the first feature is "on", "above" and "over" the second feature includes that the first feature is directly above and obliquely above the second feature, or simply indicates that the first feature is higher in horizontal height than the second feature. The fact that the first feature is "under", "below" and "beneath" the second feature includes that the first feature is directly below and obliquely below the second feature, or simply indicates that the first feature is lower in horizontal height than the second feature.

In the description of the present application, the orientation or positional relationships indicated by terms "up", "down", "left", "right" and the like are based on the orientation or positional relationships shown in the accompanying drawings, and are merely for the convenience of describing the present application and the simplification of the operations, and do not indicate or imply that the device or element referred to must be in a particular orientation, or be constructed and operated in a particular orientation, and therefore should not be construed as a limit to the scope of the present application. In addition, the terms "first" and "second" are merely used to distinguish two elements in description, and have no special meaning.

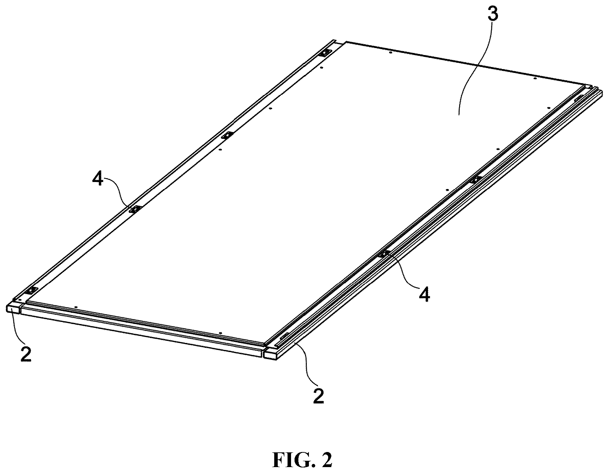

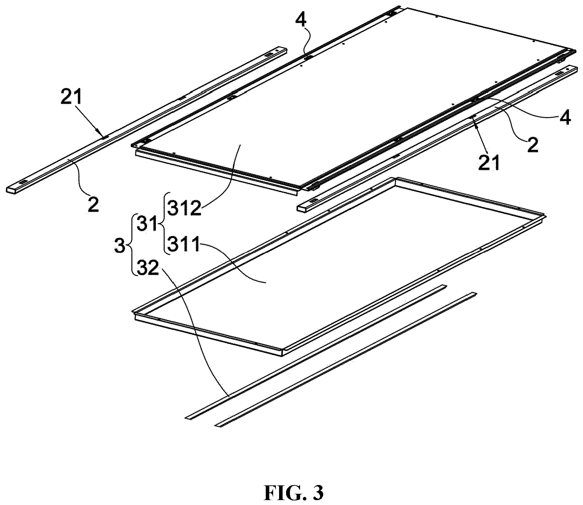

As shown in FIG. 1, the present embodiment provides an energy storage cabinet, which includes a cabinet body 1, the cabinet body 1 is provided with an upper installation space and a lower installation space. A battery pack is provided in the upper installation space, and an electrical element is provided in the lower installation space. In order to divide the cabinet body 1, a partition assembly 3 is provided within the cabinet body 1. The partition assembly 3 is horizontally provided for separating the upper installation space from the lower installation space, and the electrical element and the battery pack are mounted with a certain gap from the partition assembly 3 respectively. Specifically, as shown in FIG. 2 and FIG. 3, slide rails 2 are provided on two opposite inner walls of the cabinet body 1, and the slide rails 2 are provided between the upper installation space and the lower installation space. A groove 21 is provided in an upper side surface of each slide rail 2, and the partition assembly 3 is provided with rollers 4. The rollers 4 may be snapped into the groove 21 and may roll along the slide rails 2 to move the partition assembly 3 out of the cabinet body 1. Specifically, an opening 11 is defined on a front side of the cabinet body 1, and the partition assembly 3 may move out of the cabinet body 1 through the opening 11.

When the partition assembly 3 is mounted in the cabinet body 1, the partition assembly 3 is mounted on the slide rails 2, so that the rollers 4 are snapped into the groove 21 for limitation. When the electrical element needs to be taken out due to failure, the partition assembly 3 may be pulled so as to move the rollers out of the groove 21 and roll on the slide rails 2, thereby the partition assembly 3 may be smoothly pulled out of the cabinet body 1, so it is convenient to take the electrical element out. The rollers 4 and the groove 21 are limitedly cooperated with each other, so that the partition assembly 3 may move vertically upwards. When the electrical element is seriously deformed, the partition assembly 3 may be lifted up to provide a deformation space for the electrical element, so it is possible to prevent the partition assembly 3 from being squeezed and deformed by the electrical element, which may otherwise cause the partition assembly 3 cannot be taken out. Moreover, if the deformation of the electrical element is not serious, there is still a gap between the electrical element and the partition assembly 3, so it is not necessary to pull the blocking assembly 3 out, and the electrical element may be pulled out directly.

In order to make it easier to pull out the partition assembly 3, a slope is formed on one side of the groove 21 proximate to the opening 11, so the rollers 4 may roll along the slope to move out of the groove 21. The slope can guide the rollers 4, so it is easier for the rollers 4 to escape from the groove 21 when the partition assembly 3 is drawn.

Further, the partition assembly 3 is provided with installation holes, and the rollers 4 are respectively mounted in the installation holes, and the rollers 4 protrudes from a bottom side surface of the partition assembly 3, so that the rollers 4 may be snapped into the groove 21. Compared to the solution in which the rollers 4 are entirely provided at the bottom of the partition assembly 3, it is more convenient to mount the partition assembly 3, and it is possible to reduce the height of the partition assembly 3, so that the partition assembly 3 may be more stably mounted on the slide rails 2.

Optionally, a height of the portion of the rollers 4 protruding from the partition assembly 3 is equal to a depth of the groove 21, and the partition assembly 3 is in contact with the slide rails 2 when the rollers 4 are snapped into the groove 21. The partition assembly 3 is supported against the slide rails 2, thereby the installation stability of the partition assembly 3 is further improved.

Specifically, as shown in FIG. 3, each slide rail 2 is provided with multiple grooves 21, and correspondingly, the partition assembly 3 is provided with multiple rollers 4, and each roller 4 is correspondingly snapped into one of the grooves 21. By providing the multiple rollers 4, multiple support points and limit points are formed for the partition assembly 3, so that the partition assembly 3 may be drawn and slide more smoothly along the slide rail 2, and the partition assembly 3 is also more stably limited in the groove 21. In this embodiment, four rollers 4 are provided on each side of the partition assembly 3, and the number of rollers 4 depends on the specific size of the partition assembly 3, so it is not restricted here.

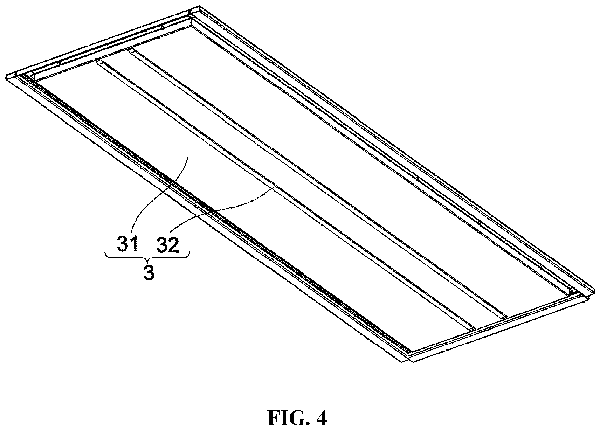

Further, as shown in FIG. 4, the partition assembly 3 includes a partition plate 31 and a blocking strip 32, and the partition plate 31 is movably provided on the slide rail 2, and the blocking strip 32 is provided on a bottom side surface of the partition plate 31. Specifically, the blocking strip 32 may be made of an epoxy resin material. By providing the blocking strip 32, it is possible to reduce a contact area between the electrical element and the partition plate 31, thereby it is helpful to reduce the friction between the electrical element and the partition plate 31, so that when the electrical element is in contact with the partition plate 31, the electrical element may be pulled out without having to pull out the partition plate 31, and it is more labor-saving to pull the partition plate 31 out.

Optionally, the blocking strip 32 is provided to extend in a movement direction of the partition assembly 3, so that when the electrical element moves relative to the partition plate 31, the electrical element remains in contact with and slides along the blocking strip 32. In this embodiment, there are two blocking strips 32, and the two blocking strips 32 are provided apart from each other and in parallel with each other.

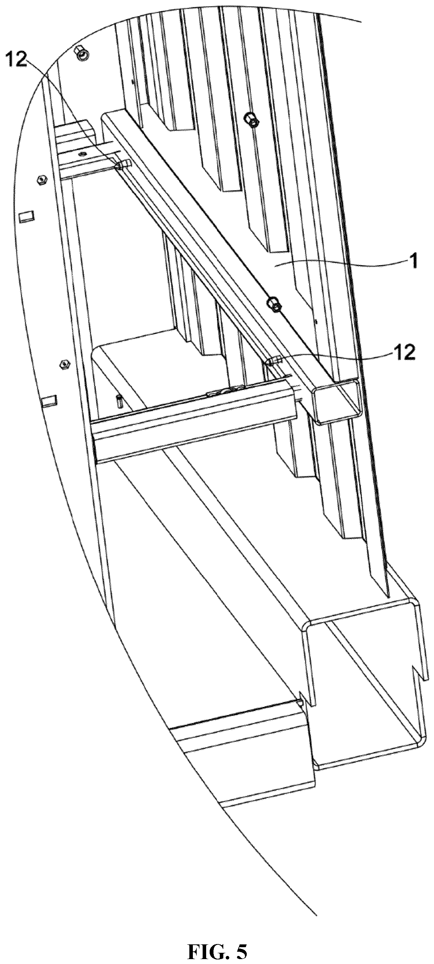

Further, as shown in FIG. 5, in order to limit the partition assembly 3 in a front and rear direction, one of the cabinet body 1 and the partition assembly 3 is provided with a positioning pin 12, and the other of the cabinet body 1 and the partition assembly 3 is provided with a positioning hole. The positioning pin 12 or positioning hole is provided on a rear side wall of the cabinet body 1, and the positioning pin 12 is inserted into the positioning hole when the partition assembly 3 is inserted into the cabinet body 1. In this embodiment, two positioning pins 12 are provided apart from each other on the rear side wall of the cabinet body 1, and two positioning holes are correspondingly provided at a rear end of the partition assembly 3. During the insertion of the partition assembly 3 into the cabinet body 1, the positioning pin 12 is inserted into the positioning hole to limit the front and back positions of the partition assembly 3. After the positioning pin 12 is inserted into the positioning hole, the roller 4 is precisely snapped into the corresponding groove 21, so that the partition assembly 3 cannot be moved freely.

Further, referring to FIG. 3, the partition plate 31 includes a heat insulation tank 311 and a cover plate 312. The heat insulation tank 311 is internally provided with heat insulation materials, and the heat insulation tank 311 is provided at a bottom side of the cover plate 312, and an edge of the cover plate 312 extending beyond the heat insulation tank 311 on each side is provided with the roller 4. Flanges are provided around the heat insulation tank 311, and the cover plate 312 is fixed to the flanges by several screws.

Optionally, periphery of the cover plate 312 extends beyond the heat insulation tank 311, and a rear side of the cover plate 312 is bent downward, and the above-mentioned positioning holes are provided at the bent.

Obviously, the above embodiments of the present application are merely examples to clearly illustrate the present application, and are not intended to restrict the embodiments of the present application. For those of ordinary skill in the art, various obvious changes, readjustments and substitutions can be made without departing from the protection scope of the present application. It is unnecessary and impossible to exhaustively list all the embodiments here. Any modification, equivalent replacement and improvement made within the spirit and principle of the present application shall be included in the protection scope defined by the claims of the present application.

## Claims

1. An energy storage cabinet, comprising:
a cabinet body (1), wherein an upper installation space and a lower installation space are provided in the cabinet body (1), and a slide rail (2) is provided on each of two opposite inner walls of the cabinet body (1), the slide rail (2) is provided between the upper installation space and the lower installation space, and a groove (21) is provided in an upper side surface of each slide rail (2);
a partition assembly (3) for separating the upper installation space from the lower installation space, and the partition assembly (3) is provided with a roller (4), and the roller (4) is allowed to be snapped into the groove (21) and roll along the slide rail (2) to move the partition assembly (3) out of the cabinet body (1).

2. The energy storage cabinet according to claim 1, wherein an opening (11) is defined on a front side of the cabinet body (1), and the partition assembly (3) is movable out of the cabinet body (1) through the opening (11); a slope is formed on one side of the groove (21) proximate to the opening (11), which allows the roller (4) to roll along the slope to move out of the groove (21).

3. The energy storage cabinet according to claim 1, wherein the partition assembly (3) is provided with an installation hole, the roller (4) is mounted in the installation hole, and the roller (4) protrudes from a bottom side surface of the partition assembly (3), which allows the roller (4) to be snapped into the groove (21).

4. The energy storage cabinet according to claim 3, wherein a height of the portion of the roller (4) protruding from the partition assembly (3) is equal to a depth of the groove (21), and the partition assembly (3) is in contact with the slide rail (2) when the roller (4) is snapped into the groove (21).

5. The energy storage cabinet according to claim 1, wherein the slide rail (2) is provided with a plurality of grooves (21), and correspondingly, the partition assembly (3) is provided with a plurality of rollers (4), and each roller (4) is correspondingly snapped into one of the grooves (21).

6. The energy storage cabinet according to any one of claims 1 to 5, wherein the partition assembly (3) comprises a partition plate (31) and a blocking strip (32), the partition plate (31) is movably provided on the slide rail (2), and the blocking strip (32) is provided on a bottom side surface of the partition plate (31).

7. The energy storage cabinet according to claim 6, wherein the blocking strip (32) extends in a moving direction of the partition assembly (3).

8. The energy storage cabinet according to claim 6, wherein the partition plate (31) comprises a heat insulation tank (311) and a cover plate (312), the heat insulation tank (311) is internally provided with heat insulation materials, and the heat insulation tank (311) is provided at a bottom side of the cover plate (312), and an edge of the cover plate (312) extending beyond the heat insulation tank (311) is provided with the roller (4).

9. The energy storage cabinet according to claim 6, wherein the blocking strip (32) is made of an epoxy resin material.

10. The energy storage cabinet according to any one of claims 1 to 5, wherein one of the cabinet body (1) and the partition assembly (3) is provided with a positioning pin (12), and the other of the cabinet body (1) and the partition assembly (3) is provided with a positioning hole, and the positioning pin (12) or the positioning hole is provided on a rear side wall of the cabinet body (1), and the positioning pin (12) is inserted into the positioning hole when the partition assembly (3) is inserted into the cabinet body (1).

11. The energy storage cabinet according to any one of claims 1 to 5, wherein a battery pack is provided in the upper installation space, and an electrical element is provided in the lower installation space.
